Europäisches Patentamt

European Patent Office

Office européen des brevets

(11) Numéro de publication: **0 234 142 B1**

## (12) FASCICULE DE BREVET EUROPEEN

(45) Date de publication de fascicule du brevet:
12.06.91

(51) Int. Cl.⁵: **F16L 55/16, B29C 63/28**

(21) Numéro de dépôt: 86402661.2

(22) Date de dépôt: 02.12.86

(54) **Procédé de garnissage interne de conduites.**

(30) Priorité: 27.12.85 FR 8519349
21.04.86 FR 8605693

(43) Date de publication de la demande:
02.09.87 Bulletin 87/36

(45) Mention de la délivrance du brevet:
12.06.91 Bulletin 91/24

(84) Etats contractants désignés:
AT BE CH DE ES GB GR IT LI LU NL SE

(56) Documents cités:
EP-A- 0 115 993
FR-A- 2 542 416
GB-A- 2 018 384
GB-A- 2 074 691
US-A- 4 009 063

(73) Titulaire: Société COOPETANCHE, S.A.
314, Rue du Maréchal Foch
F-77530 Vaux le Penil(FR)

(72) Inventeur: Renaud, Alain
18, Sente du Pin
F-93370 Montfermeil(FR)

(74) Mandataire: Epstein, Henri
74 bis rue de Paris
F-95680 Montlignon(FR)

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention concerne un procédé de garnissage interne de conduites, ledit garnissage étant réalisé sous forme d'un manchon autoporteur.

On connaît un procédé de garnissage de conduites qui est caractérisé en ce que l'on introduit dans la conduite un manchon perméable sur au moins une partie de son épaisseur à une résine thermodurcissable, telle qu'une résine époxyde, ledit manchon pouvant agrandir sa section sous l'action d'une pression exercée sur sa paroi interne et pouvant ainsi adapter sa section à celle de la conduite, sans que le matériau composite utilisé pour ledit manchon subisse une déformation élastique ou plastique ; la pression sur la paroi interne, dans ce procédé connu, est exercée par l'intermédiaire d'un ballon gonflable jusqu'à l'application de la paroi extérieure dudit manchon contre la paroi interne de ladite conduite, et elle est maintenue jusqu'au durcissement de la résine, la pression et la température du fluide de gonflage et du ballon étant contrôlées pendant toute l'opération. Après le durcissement de la résine, ledit ballon est dégonflé et retiré. Dans ce procédé connu, on utilise un matériau composite qui peut être entièrement perméable à une résine thermodurcissable, telle que, par exemple, un matériau constitué par au moins un ensemble comportant une première couche réalisée sous forme d'une armature, par exemple sous forme d'un tissu tissé en fibres de verre ; une deuxième couche en un tissu non tissé tel qu'un mat de verre ; et une troisième couche réalisée sous forme d'une armature, par exemple sous forme d'un tissu tissé en fibres de verre.

Un tel procédé et un tel matériau-composite sont connus des documents FR-A- 25 37 056 et FR-A- 25 46 817(EP-A-0 101 340).

Il est également connu du brevet US-A-4009063 un procédé de garnissage interne de conduites au moyen d'un stratifié gonflable comportant un manchon en matière telle que le feutre, à bords longitudinaux formant un joint à recouvrement imprégnée de résine thermodurcissable et une gaine intérieure gonflable en matière synthétique.

Selon le brevet GB-A-2018384 le garnissage comprend un manchon intérieur en matière synthétique dont la face extérieure est en contact avec un revêtement de matière textile imprégnée de résine thermodurcissable.

La présente invention a pour objet d'améliorer et de simplifier les procédés décrits ci-dessus tout en rendant le procédé de garnissage plus fiable.

Conformément à la présente invention, le procédé de garnissage interne de conduites comprend les étapes suivantes :

(i) préparation de la face intérieure de la conduite, de façon connue en soi ;

(ii) préparation d'un premier manchon réalisé en une matière composite perméable à une résine thermodurcissable, dont les bords longitudinaux forment un joint à recouvrement et peuvent glisser l'un par rapport à l'autre et pouvant ainsi agrandir sa section sous l'action d'une pression interne de façon connue en soi sans que ledit matériau subisse une déformation ;

(iii) préparation d'un deuxième manchon dont les bords longitudinaux sont reliés fixes et qui est réalisé en une matière synthétique pourvue sur sa face extérieure de fibres ou similaires pouvant adhérer à la face intérieure enduite de résine thermodurcissable du premier manchon, ledit deuxième manchon pouvant agrandir sa section sous l'action d'une pression par la déformation plastique de la matière le constituant ; ledit manchon pouvant être réalisé sous forme d'un ballon gonflable ;

(iv) éventuellement, la préparation d'un ballon gonflable, connue en soi;

(v) introduction dudit deuxième manchon pouvant être réalisé sous forme d'un ballon gonflable dans ledit premier manchon ;

(vi) éventuellement, l'introduction dudit ballon gonflable connu en soi dans ledit deuxième manchon, ledit deuxième manchon - qui ne fait pas fonction de ballon gonflable -, et ledit ballon gonflable étant introduits dans ledit premier manchon ;

(vii) imprégnation dudit premier manchon avec une résine thermodurcissable, en assurant la pénétration de ladite résine sur toute l'épaisseur dudit premier manchon jusqu'à sa face intérieure ;

(viii) introduction de l'ensemble précisé dans le point (vii) cidessus dans la conduite, l'ensemble étant plié pour faciliter son introduction par une extrémité de la conduite et son transport vers l'autre extrémité de la conduite ;

(ix) introduction d'un fluide sous pression soit dans ledit deuxième manchon (s'il est réalisé sous forme de ballon gonflable, soit dans le ballon gonflable, la température et la pression étant contrôlées en fonction des conditions du chantier, à savoir des conditions atmosphériques, des conditions du sol), des nappes phréatiques, etc ;

(x) agrandissement de la section dudit deuxième manchon par déformation plastique de la matière synthétique le constituant jusqu'à ce que la face extérieure porteuse de fibres dudit deuxième manchon soit appliquée contre la face intérieure dudit premier manchon et adhère à cette face ; agrandissement simultané de la section dudit premier manchon par écartement de ses bords longitudinaux et dudit deuxième manchon jusqu 'à ce que la face extérieure dudit premier manchon soit appliquée contre la paroi intérieure de la conduite.

(xi) maintien de la pression interne et de la température de façon connue en soi jusqu'au durcissement de la résine ;

(xii) diminution progressive de la pression d'application et découpe des extrémités dudit deuxième manchon qui dépassent les extrémités de la conduite, au cas où ledit deuxième manchon a fait fonction de ballon gonflable, la partie restante dans la conduite dudit deuxième manchon, par son adhérence audit premier manchon, étant devenue partie intégrale dudit matériau composite ;

(xiii) dégonflage total du ballon (s'il est utilisé) et retrait du ballon.

Selon une variante du procédé selon l 'invention, l 'ensemble comprenant ledit premier manchon imprégné de résine et au moins ledit deuxième manchon pouvant être réalisé sous forme de ballon gonflable et, éventuellement, un ballon gonflable au cas où le deuxième manchon ne remplit pas cette fonction, est introduit dans une enveloppe préparée préalablement et réalisée en une matière synthétique non perméable à une résine thermodurcissable, dont les bords longitudinaux sont reliés fixes et dont la section peut s'agrandir sous l'action d'un fluide jusqu 'à ce que sa face extérieure soit appliquée fermement contre la paroi intérieure de la conduite.

De préférence, ladite enveloppe est légèrement plus courte que la conduite, les extrémités de l'ensemble : premier et deuxième manchons, étant alors directement appliquées contre la paroi intérieure aux extrémités de la conduite pour y adhérer, l'espace entre les extrémités de l'enveloppe et les parties dudit premier manchon adhérant aux extrémités de la conduite étant rempli de résine en provenance dudit premier manchon, ladite résine formant bouchon d'étanchéité après durcissement.

D'autres caractéristiques et avantages ressortiront du texte suivant donné à titre d'exemple et des figures y afférentes.

La figure 1a montre, en coupe, de façon schématique, la disposition des manchons, enveloppe et ballon gonflable, dans la conduite, après le début de l'introduction d'un fluide sous pression.

La figure 1b montre, en coupe, de façon schématique, la disposition du manchon de garnissage interne appliqué contre la paroi intérieure de la conduite, la résine ayant durci.

La figure 2 montre, de façon schématique et indicative, la disposition d'un ensemble, manchons, enveloppe, dans une conduite lors de la traction de cet ensemble le long de la conduite.

La figure 3 montre en vue du dessus un tissu tissé dont la trame comprend un fil (électrique) chauffant disposé dans le sens parallèle à l'axe x-x du manchon et de la conduite.

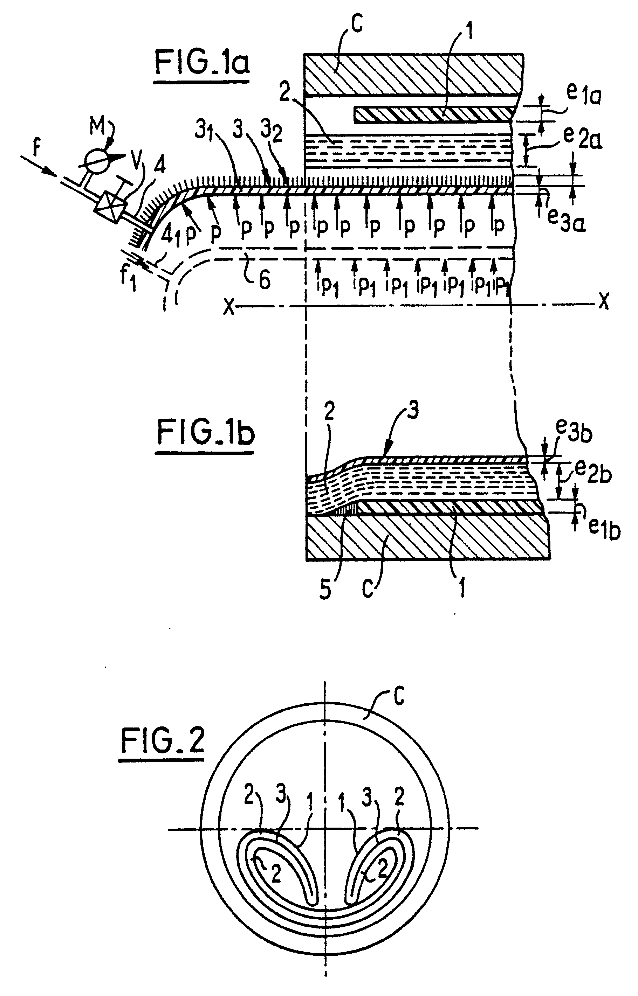

Sur la figure 1, une extrémité d'une conduite (C) est montrée.

Les parties constitutives du manchon de garnissage intérieur définitif sont montrées -de façon schématique et pour mieux comprendre sa formation par le procédé conforme à l'invention- sans avoir un contact quelconque entre elles, au moment d'application de la pression uniforme (p) par un fluide dont la température et la pression sont constamment contrôlées et déterminées, de façon connue en soi, en fonction des conditions du chantier (température atmosphérique, instantanée, type du sol , condition de la nappe phréatique, type du produit véhiculé normalement dans la conduite etc...).

Selon un premier mode de réalisation, on introduit dans la conduite un ensemble comprenant une enveloppe extérieure (1) en une matière synthétique étanche et non perméable aux fluides - par exemple du P.V.C . - ; on introduit, en outre, un premier manchon (2) en un matériau composite, à base de mat de verre et tissu de verre par exemple, perméable sur toute son épaisseur à une résine thermodurcissable avant polymérisation et enduit avec une telle résine, et un deuxième manchon (3) réalisé sous forme d'une feuille ($3_1$) en matière synthétique telle que le polyéthylène, le P.V.C. etc..., dont la face supérieure porte des fibres susceptibles de pouvoir adhérer à la face inférieure dudit premier manchon (2) après durcissement de la résine. Ces fibres ($3_2$) peuvent être en polyester, verre, etc. ; elles sont implantées dans la feuille ($3_1$) par calandrage ou floquage ou tout autre procédé. Le deuxième manchon (3) est réalisé sous forme d'un ballon ou moule étanche qui dépasse les extrémités de la conduite (C). Une conduite (4) comprenant une vanne (V) et un manomètre (M) permet l'introduction d'un fluide sous pression dans ledit ballon selon la flèche (f).

En général, le manchon (2) et le manchon (3) sont préparés à l'atelier. Le manchon (2) est réalisé en partant d'une feuille en un matériau composite ; les extrémités de la feuille formant un joint de recouvrement. La liaison entre les deux extrémités de la feuille formant le joint de recouvrement est réalisée (par exemple par un aiguilletage lâche) de façon à ce que l'une des extrémités puisse glisser par rapport à l'autre. La section du manchon peut donc s'agrandir sans que le matériau composite subisse une déformation élastique ou plastique. Le manchon (3) est réalisé à partir d'une feuille ($3_1$) en matière synthétique étanche de façon à ce que la face extérieure du manchon porteur des fibres ($3_2$), qui peuvent être en polyester, verre, etc... Les bords de la feuille constituant le joint du manchon sont collés ou soudés. Ce manchon (3) peut également être réalisé sous forme d'un ballon gonflable par une conduite (4). Le manchon (3) est introduit à l'intérieur du manchon (2) à l'atelier ou à l'usine, de préférence. L'ensemble des manchons (2) et (3) est plié et transporté sur le site du chantier.

C'est à l'emplacement du chantier que le manchon (2) est enduit avec une résine thermodurcissable, telle que la résine époxyde, de façon à ce que cette résine pénètre à travers toute l'épaisseur ($e_{2a}$) du manchon. L'ensemble des deux manchons est alors introduit dans une enveloppe (1) en un matériau synthétique étanche qui peut avoir été préparé à l'atelier, les bords de la feuille constituant le joint étant reliés, de façon étanche, par collage ou soudage, par exemple. La longueur de l'enveloppe (1) est légèrement inférieure à la longueur du manchon (2) de façon à ce que les extrémités du manchon (2) et du manchon-ballon (3) dépassent les extrémités de l'enveloppe (1). La longueur du manchon (2) est au moins égale à celle de la conduite (C).

La section ($S_3$) du manchon-ballon (3) est plus petite que la section ($S_2$) du manchon (2), et la section ($S_2$) est inférieure à la section ($S_1$) de l'enveloppe.

L'ensemble : manchon (2, 3) et enveloppe (1) est plié convenablement (voir fig. 2) et il est, après avoir été introduit dans la conduite (C), tiré d'une extrémité de cette conduite jusqu'à son autre extrémité.

Avant le gonflage du manchon-ballon (3) avec un fluide sous pression, dont la pression et la température sont constamment contrôlées, l'épaisseur du manchon (3) est ($e_{3a}$), celle du manchon (2) est ($e_{2a}$) et celle de l'enveloppe (1) est ($e_{1a}$).

Lorsque la pression (p) agit uniformément sur la face intérieure du manchon-ballon (3), celui-ci se gonfle et, pour appliquer les fibres ($3_2$) contre la face intérieure du manchon (2) enduit de résine, agrandit la section ($S_3$) par déformation plastique de la feuille ($3_1$). La pression (p) continuant à agir les manchons (2) et (3) agrandissent leurs sections ($S_2$) et ($S_3$) jusqu'à ce que la face extérieure du manchon (2) soit appliquée contre la face intérieure de l'enveloppe (1). Sous l'action continue de la pression (p), la section ($S_1$) de l'enveloppe (1) s'agrandit en même temps que les sections ($S_2$) et ($S_3$) jusqu'à ce que la face extérieure de l'enveloppe (1) soit fermement appliquée contre la paroi intérieure de la conduite (C). Les épaisseurs des constituants du manchon de garnissage définitif sont alors ($e_{1b}$), ($e_{2b}$) et ($e_{3b}$). Tandis que $e_{2a} = e_{2b}$, c'est-à-dire que l'épaisseur du manchon (2) n'a pas varié, $e_{1b} <$, $e_{1a}$, et $e_{3b} < e_{3a}$, du fait que la feuille ($3_1$) du manchon (3) a subi une déformation plastique, et que l'enveloppe (1) s'est également déformée en agrandissant sa section ($S_1$). On maintient la pression et la température choisies jusqu'au durcissement de la résine. Le manchon (3) adhère maintenant fermement par sa face extérieure par toutes les fibres ($3_2$) à la face extérieure du manchon (2), les deux manchons (2) et (3) formant ainsi un ensemble composite. Les extrémités des manchons (2) adhèrent directement sur la paroi intérieure de la conduite (C). Les faibles espaces entre les extrémités de l'enveloppe (1) et les extrémités du manchon (2) qui adhèrent sur la paroi de la conduite (C) sont remplis par le surplus de résine en provenance du manchon (2) ; ce surplus de résine après durcissement constitue un join d'étanchéité (5) interdisant toute infiltration éventuelle entre l'enveloppe (1) et la face extérieure du manchon (2). On coupe les extrémités du manchon-ballon (3) et, éventuellement, du manchon (2) qui dépassent les extrémités de la conduite (C) après avoir diminué et enlevé totalement la pression (p).

L'utilisation d'une enveloppe est optionnelle. Elle présente certains avantages, par exemple pour le garnissage de conduites ayant des sections importantes et/ou des conduites de grande longueur, comme il sera précisé ci-après.

Il est également, dans le cadre de l'invention, d'utiliser un ballon gonflable (6) par une conduite (4), selon la flèche ($f_1$), qui peut être retiré après dégonflage et être réutilisé. Dans ce cas, le manchon (3) n'est évidemment pas réalisé sous forme d'un ballon gonflable. L'emploi d'un ballon gonflable et dégonflable qui peut être retiré peut s'avérer avantageux dans certains cas.

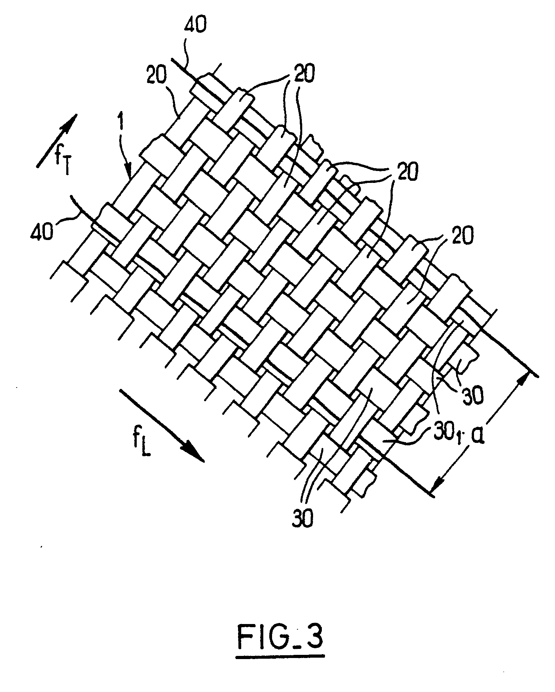

Dans le mode de réalisation particulier montré dans la figure 3, un tissu tissé (10) comporte des brins longitudinaux (30) disposés dans le sens longitudinal du tissu selon la flèche $f_L$, et donc dans le sens de l'axe x-x longitudinal du manchon de garnissage et de la conduite. Des brins horizontaux (20) disposés selon la flèche $f_T$ qui sont sensiblement parallèles à la face intérieure de la conduite pourvue d'un manchon de garnissage, s'entrelacent avec les brins (30). Ce tissu tissé constitue au moins l'une des couches du matériau composite dudit premier manchon. Chaque brin (20, 30) peut être une bande en un matériau approprié, tel que par exemple une matière synthétique ou le verre, la céramique, le carbone et similaire, ou encore être constitué par une multiplicité de fibres en des matériaux appropriés disposés les uns à côté des autres, ou encore par des tores multifibres.

Des éléments chauffants sous forme de fils métalliques (40) peuvent être soit disposés sur certaines bandes ou être intégrés dans la multiplicité des fibres constituant les brins (30). Ces fils (40) sont donc partie intégrale des brins (30) et restent dans le tissu après le durcissement de la résine, lors de l'application du manchon de garnissage dans la conduite.

Seulement certains des brins (30₁) sont pourvus des éléments (40) chauffants. La distance (a) entre ces brins (30₁) - et éventuellement le diamètre des fils (40) - est déterminée en fonction des conditions atmosphériques, des conditions du chantier, de la résine utilisée, du temps désiré de durcissement de la résine, des dimensions de la conduite, de la forme de sa section, etc... Il est essentiel que la chaleur fournie par les éléments (50) soit telle que la température de polymérisation (durcissement de la résine)soit sensiblement la même sur toute la longueur du manchon et sur toute sa périphérie lors de l'opération de garnissage. Les extrémités des fils (40) sont reliées à des moyens de contrôle de la température connus en soi (non montré sur la figure 4), ces moyens étant débranchés après la fin de l'opération de garnissage.

Certains brins longitudinaux peuvent être entièrement réalisés sous forme de bandes chauffantes. Le chauffage peut s'effectuer par des moyens électriques ou assimilés, gaz chauds - dans ce cas, lesdites bandes chauffantes sont des conduites pour le gaz - etc...

L'utilisation d'un manchon (3) présente un certain nombre d'avantages. Sa présence accroît la fiabilité en matière d'étanchéité et résistance aux matières chimiques diverses, le matériau de la feuille (3₁) pouvant être choisi en conséquence. Egalement, il permet souvent de diminuer le coëfficient de frottement du fluide transporté dans la conduite réhabilitée.

L'utilisation d'une enveloppe (1) est, en général, avantageuse. En effet, le manchon de garnissage définitif devient totalement auto-porteur, la paroi de la conduite (C) même fortement avariée ne servant que de support. En outre, le procédé conforme à l'invention assure une répartition régulière de la résine sur toute la longueur de la conduite (C), cette répartition restant régulière aussi bien lors de la translation de l'ensemble dans la conduite que pendant l'opération de gonflage.

Les pertes de résines sont totalement évitées.

Lorsque l'on effectue un garnissage selon le procédé connu, les extrémités enduites de résine du manchon replié dans la conduite (C) ont tendance à se rapprocher de la partie centrale du manchon enduit de résine (voir fig. 2) ; la résine des extrémités et la résine de ladite partie centrale ont tendance à se réunir. Ainsi, pour commencer l'opération de gonflage, il faut utiliser une pression relativement élevée. Cet inconvénient n'existe plus si l'on utilise le procédé conforme à la présente invention. On obtient ainsi, à pression (p) sensiblement constante un déploiement régulier de l'ensemble du manchon de garnissage.

Enfin, le procédé conforme à la présente invention permet d'éviter toute infiltration éventuelle venant de l'extérieur pendant la période de polymérisation (du durcissement) de la résine.

**Revendications**

1. Procédé de garnissage interne de conduites comprenant les étapes suivantes :

   (i) préparation de la face intérieure de la conduite, de façon connue en soi ;

   (ii) préparation d'un premier manchon réalisé en une matière composite perméable à une résine thermodurcissable, dont les bords longitudinaux forment un joint à recouvrement et peuvent glisser l'un par rapport à l'autre et pouvant ainsi agrandir sa section sous l'action d'une pression interne de façon connue en soi sans que ledit matériau subisse une déformation ;

   (iii) préparation d'un deuxième manchon dont les bords longitudinaux sont reliés fixes et qui est réalisé en une matière synthétique pourvue sur sa face extérieure de fibres ou similaires pouvant adhérer à la face intérieure enduite de résine thermodurcissable du premier manchon, ledit deuxième manchon pouvant agrandir sa section sous l'action d'une pression par la déformation plastique de la matière le constituant ; ledit manchon pouvant être réalisé sous forme d'un ballon gonflable ;

   (iv) éventuellement, la préparation d'un ballon gonflable, connue en soi ;

   (v) introduction dudit deuxième manchon pouvant être réalisé sous forme d'un ballon gonflable dans ledit premier manchon ;

   (vi) éventuellement, l'introduction dudit ballon gonflable connu en soi dans ledit deuxième manchon, ledit deuxième manchon - qui ne fait pas fonction de ballon gonflable - et ledit ballon gonflable étant introduits dans ledit premier manchon ;

   (vii) imprégnation dudit premier manchon avec une résine thermodurcissable, en assurant la pénétration de ladite résine sur toute l'épaisseur dudit premier manchon jusqu'à sa face intérieure ;

   (viii) introduction de l'ensemble précisé dans le point (vii) ci-dessus dans la conduite, l'ensemble étant plié pour faciliter son introduction par une extrémité de la conduite et son transport vers l'autre extrémité de la conduite ;

   (ix) introduction d'un fluide sous pression soit dans ledit deuxième manchon (s'il est réalisé sous forme de ballon gonflable), soit dans le ballon gonflable, la température et la pression étant contrôlées en fonction des conditions du chantier, à savoir des conditions atmosphériques, des conditions du sol, des nappes phréatiques, etc... ;

(x) agrandissement de la section dudit deuxième manchon par déformation plastique de la matière synthétique le constituant jusqu'à ce que la face extérieure porteuse de fibres dudit deuxième manchon soit appliquée contre la face intérieure dudit premier manchon et adhère à cette face ; agrandissement simultané de la section dudit premier manchon par écartement de ses bords longitudinaux et dudit deuxième manchon jusqu 'à ce que la face extérieure dudit premier manchon soit appliquée contre la paroi intérieure de la conduit ;

(xi) maintien de la pression interne et de la température de façon connue en soi jusqu'au durcissement de la résine ;

(xii) diminution progressive de la pression d'application et découpe des extrémités dudit deuxième manchon qui dépassent les extrémités de la conduite, au cas où ledit deuxième manchon a fait fonction de ballon gonflable, la partie restante dans la conduite dudit deuxième manchon, par son adhérence audit premier manchon, étant devenue partie intégrale dudit matériau composite ;

(xiii) dégonflage total du ballon (s'il est utilisé) et retrait du ballon.

2. Procédé selon la revendication 1, caractérisé en ce que l'ensemble comprenant ledit premier manchon imprégné de résine et au moins ledit deuxième manchon pouvant être réalisé sous forme de ballon glonflable et, éventuellement, un ballon gonflable au cas où le deuxième manchon ne remplit pas cette fonction, est introduit dans une enveloppe préparée préalablement et réalisée en une matière synthétique non perméable à une résine thermodurcissable, dont les bords longitudinaux sont reliés fixes et dont la section peut s'agrandir sous l'action d'un fluide jusqu'à ce que sa face extérieure soit appliquée fermement contre la paroi intérieure de la conduite.

3. Procédé selon la revendication 2, caractérisé en ce que ladite enveloppe est légèrement plus courte que la conduite, les extrémités de l 'ensemble : premier et deuxième manchons, étant alors directement appliquées contre la paroi intérieure aux extrémités de la conduite pour y adhérer, l'espace entre les extrémités de l'enveloppe et les parties dudit premier manchon adhérant aux extrémités de la conduite étant rempli de résine en provenance dudit premier manchon, ladite résine formant bouchon d'étanchéité après durcissement.

## Claims

1. Process for internally lining ducts comprising following steps:

i) preparing the inner face of the duct in a known manner:

ii) preparing a first sleeve made from a composite material permeable to a thermosetting resin, whose longitudinal edges form an overlapping joint and may slide each with respect to other and are thus able to enlarge its section under the action of an internal pressure in a known manner without said composite material undergoing deformation;

iii) preparing a second sleeve whose longitudinal edges are fixed together and which is made from a synthetic material having on its outer face fibers or similar adhering to the thermosetting resin coated inner face of said first sleeve, said second sleeve only being able to enlarge its section under action of a pressure by plastic deformation of the material forming it, said sleeve being eventually made from an inflatable balloon;

iv) eventually preparing an inflatable balloon in a known manner;

v) introducing into said first sleeve said second sleeve which may be an inflatable balloon;

vi) introducing said inflatable balloon into said second sleeve, said second sleeve - which is not working as inflatable balloon - and said inflatable balloon being introduced into said first sleeve;

vii) impregnating said first sleeve with a thermosetting resin, ensuring penetration of said resin over the whole thickness of said first sleeve as far as its inner face;

viii) introducing the assembly mentioned under item vii above into the duct, the assembly being folded so as to facilitate introduction thereof through one end of the duct and transporting thereof towards the other end of the duct;

ix) introducing a pressurized fluid, either into said second sleeve (if it is not made as inflatable balloon), or into the inflatable balloon, the temperature and the pressure being controlled according to the site conditions, such as atmospheric and soil conditions, phreatic sheets, etc.;

x) enlarging the section of said second sleeve by plastic deformation of the synthetic material forming it until the outer fiber carrying face of said second sleeve is applied against the inner face of said first sleeve and adheres to this face, simultaneously enlarging the section of said first sleeve by setting aside its longitudinal edges and of said second sleeve until the outer face of said first sleeve is applied towards the inner wall of the duct;

xi) maintaining the internal pressure and the temperature until the resin hardens;

xii) progressively reducing the applied pressure and cutting the ends of said second sleeve which extend from the ends of the duct, in case said second sleeve is working as inflatable balloon, the part of said second sleeve remaining in the duct by its adherence to said first sleeve having become an integral part of said composite material, and

xiii) totally deflating the balloon, if used, and then withdrawing the balloon.

2. Process as claimed in claim 1, characterized in that the assembly comprising said first resin impregnated sleeve and at least said second sleeve, which may be made as inflatable balloon and, eventually an inflatable balloon in case said second sleeve does not work as inflatable balloon, is introduced into an envelop made ready before from a synthetic material impermeable to the thermosetting resin, whose longitudinal edges are fixed together and whose section may enlarge under the action of a fluid until its outer face is applied firmly against the inner wall of the duct.

3. Process as claimed in claim 2, characterized in that said envelop is slightly shorter than the duct, the ends of the first and second sleeve assembly then being directly applied against the inner wall at the ends of the duct for adhereing thereto, the space between the ends of the envelope and the parts of said first sleeve adhering to the ends of the duct being filled with the resin coming from the first sleeve, said resin forming a sealing plug after hardening.

**Ansprüche**

1. Verfahren zur Innenauskleidung von Leitungen, das die folgenden Stufen umfaßt:

(i) Herstellen der Innenfläche der Leitung in an sich bekannter Weise;

(ii) Herstellen einer ersten Hülle, die aus einem Verbundmaterial hergestellt ist, das für ein in der Wärme härtbares Harz permeabel ist und deren Längsränder eine Überdeckungsfuge bilden und bezüglich einander gleiten können und so ihren Querschnitt unter der Wirkung eines Innendrucks in an sich bekannter Weise vergrößern können, ohne daß dieses Material eine Verformung erleidet;

(iii) Herstellen einer zweiten Hülle, deren Längsränder fest verbunden sind und die aus einem synthetischen Material hergestellt ist, das auf seiner Außenfläche mit Fasern oder ähnlichem versehen ist, die an der mit Wärme härtbarem Harz beschichteten Innenfläche der ersten Hülle haften können, wobei die zweite Hülle sich unter der Wirkung eines Druckes durch die plastische Verformung des sie bildenden Materials vergrößern kann; wobei die Hülle in Form eines blähbaren Ballons hergestellt sein kann;

(iv) gegebenenfalls die Herstellung eines blähbaren oder aufblasbaren Ballons in an sich bekannter Weise;

(v) Einführen dieser zweiten Hülle, die in Form eines blähbaren Ballons ausgebildet sein kann, in diese erste Hülle;

(vi) gegebenenfalls Einführen dieses an sich bekannten blähbaren Ballons in diese zweite Hülle, wobei die zweite Hülle - die nicht die Funktion eines aufblähbaren Ballons hat - und dieser aufblähbare Ballon in diese erste Hülle eingeführt werden;

(vii) Imprägnieren dieser ersten Hülle mit einem in der Wärme härtbarem Harz unter Sicherstellen des Eindringens dieses Harzes über die gesamte Dicke dieser ersten Hülle bis zu ihrer Innenfläche;

(viii) Einführen der oben unter Punkt (vii) präzisierten Gesamtanordnung in die Leitung, wobei die Gesamtanordnung gefaltet wird, um ihre Einführung an einem Ende der Leitung und ihren Transport gegen das andere Ende der Leitung zu erleichtern;

(ix) Einführen eines Fluids unter Druck entweder in diese zweite Hülle (wenn sie in Form eines blähbaren Ballons hergestellt ist) oder in den blähbaren Ballon, wobei Temperatur und Druck als Funktion der Baustellenbedingungen, nämlich der atmosphärischen Bedingungen, der jeweilgen Bedingungen des Untergrundes, der Grundwasserschichten etc. geregelt werden;

(x) Vergrößern des Querschnitts dieser zweiten Hülle durch plastische Verformung des synthetischen sie bildenden Materials bis die Fasern tragende Außenfläche dieser zweiten Hülle gegen die Innenfläche der ersten Hülle gepreßt wird und an dieser Fläche haftet; gleichzeitiges Vergrößern des Querschnitts der ersten Hülle durch Aufweiten ihrer Längsränder und der zweiten Hülle, bis die Außenfläche der ersten Hülle gegen die Innenfläche der Leitung gepreßt wird;

(xi) Halten des Innendrucks und der Temperatur in an sich bekannter Weise bis zum Aushärten des Harzes;

(xii) progressive Verminderung des Anpreßdrucks und Zuschneiden der Enden dieser Hülle, die über die Enden der Leitungen hinausgehen, für den Fall, daß diese zweite Hülle die Funktion eines blähbaren Ballons übernommen hat, wobei der in der Leitung verbleibende Teil dieser zweiten Hülle aufgrund ihrer Haftung an der ersten Hülle integraler Bestandteil dieses Verbundmaterials geworden ist;

(xiii) totales Entblähen des Ballons (falls dieser verwendet wurde) und Herausziehen des Ballons.

2. Verfahren nach Anspruch 1, dadurch gekennzeichnet, daß die die erste mit Harz imprägnierte Hülle umfassende Gesamtanordnung und wenigstens diese zweite Hülle in Form eines blähbaren Ballons ausgebildet sein können und daß gegebenenfalls ein blähbarer Ballon für den Fall, daß die zweite Hülle diese Funktion nicht erfüllt, in einen vorher hergestellten Mantel, der aus einem synthetischen für ein in der Wärme härtbares Harz nicht permeables Material ausgeführt wurde, eingeführt wird, wobei deren Längsränder fest verbunden sind und deren Querschnitt sich unter der Wirkung eines Fluids vergrößern kann, bis ihre Außenfläche fest gegen die Innenfläche der Leitung gepreßt wird.

3. Verfahren nach Anspruch 2, dadurch gekennzeichnet, daß dieser Mantel geringfügig kürzer als die Leitung ist, wobei die Enden der aus erster und zweiter Hülle bestehenden Gesamtanordnung dann direkt gegen die Innenwandung an den Enden der Leitung, um hieran zu haften, gepreßt werden, wobei der Raum zwischen den Enden der Hülle und den Teilen der ersten Hülle, die an den Enden der Leitung haften, mit von der ersten Hülle stammendem Harz gefüllt wird, wobei das Harz nach dem Härten einen dichtenden Verschluß bildet.

FIG.1a

FIG.1b

FIG.2

FIG_3